# EUROPÄISCHE PATENTSCHRIFT

(11) **EP 4 337 445 B1**
(45) Veröffentlichungstag und Bekanntmachung des Hinweises auf die Patenterteilung: **04.06.2025**
(21) Anmeldenummer: 22726762.2
(22) Anmeldetag: 04.05.2022
(51) Int. Cl.: B29C 48/08, B29C 48/10, B29C 48/92

(54) **VERFAHREN ZUR HERSTELLUNG VON FOLIE AUS EINER GESAMTMENGE AN ROHSTOFFEN MIT EINER FOLIENEXTRUSIONSMASCHINE SOWIE COMPUTERPROGRAMMPRODUKT ZUR DURCHFÜHRUNG DES VERFAHRENS**
METHOD FOR PRODUCING FILM FROM A TOTAL QUANTITY OF RAW MATERIALS USING A FILM EXTRUSION MACHINE, AND COMPUTER PROGRAM PRODUCT FOR CARRYING OUT THE METHOD
PROCÉDÉ DE FABRICATION D'UNE FEUILLE À PARTIR D'UNE QUANTITÉ GLOBALE DE MATIÈRES PREMIÈRES AU MOYEN D'UNE MACHINE D'EXTRUSION DE FEUILLES ET PRODUIT-PROGRAMME INFORMATIQUE POUR LA MISE EN OEUVRE DU PROCÉDÉ

(30) Priorität: 14.05.2021 DE 102021112620
(43) Veröffentlichungstag der Anmeldung: 20.03.2024
(73) Patentinhaber: Windmöller & Hölscher KG, 49525 Lengerich (DE)
(72) Erfinder: BACKMANN, Martin, 49525 Lengerich (DE); BUSSMANN, Markus, 49525 Lengerich (DE); HOFFMANN, Wolfgang, 49525 Lengerich (DE); SCHUH, Melanie, 49525 Lengerich (DE); SCHMITZ, Torsten, 49525 Lengerich (DE)
(86) Internationale Anmeldenummer: PCT/EP2022/062005
(87) Internationale Veröffentlichungsnummer: WO 2022/238206

(56) Entgegenhaltungen:
- DE-A1- 102019 127 548
- DE-A1- 102019 127 549

## Beschreibung

Die Erfindung betrifft Verfahren zur Herstellung von Folie aus einer Gesamtmenge an Rohstoffen mit einer Folienextrusionsmaschine gemäß dem Oberbegriff des Anspruchs 1. Weiterhin betrifft die Erfindung ein entsprechendes Computerprogrammprodukt.

Es ist bekannt, dass zur Herstellung von Folie mit gewünschten Eigenschaften Folienextrusionsanlagen hinsichtlich ihrer Produktionsparameter eingestellt werden. Eine Vielzahl von Produktionsparametern ist dabei zu berücksichtigen. So sind an vielen Stellen Temperaturen, Drücke oder andere physikalische Größen, die direkt auf die Rohstoffe, die Zwischenprodukte und/oder die fertige Folie einwirken, einzustellen. Dies gilt insbesondere für die Einstellung, also die Steuerung und/oder die Regelung der Folienextrusionsanlage.

Die hergestellte Folie kann dann, insbesondere im Labor, aber auch noch während der Herstellung, hinsichtlich ihrer Eigenschaften charakterisiert werden. Es werden insbesondere die tatsächliche Erfüllung einer Funktion der Folie, aber auch messbare Folienparameter wie Reißfestigkeit oder Stretchfähigkeit der Folie, untersucht.

Bekannte Lösungen basieren bei der Steuerung und/oder Regelung der Folienextrusionsanlage zu einem großen Teil auf der Erfahrung und dem Wissen des Bedienpersonals.

Gleiches gilt bei der Auswahl der Rohstoffe. Auch hier erfolgt die Auswahl der Rohstoffe aufgrund von Erfahrungen, Versuchen und der Angaben der Hersteller zu den Rohstoffen.

So ist aus der DE 10 2019 127 549 A1 ein Verfahren bekannt, welches eine Auswahl eine Folienextrusionsanlage, sowie die Eingabe der die Folienextrusionsanlage betreffenden Parameter und Einstellungen, der gewünschten Eigenschaften der herzustellenden Folie und der für die Herstellung verwendeten Rohstoffe vorsieht in ein Produktionsmodell vorsieht. Auch hier erfolgt jedoch die Auswahl der in der Produktion zu verwendenden Rohstoffe maßgeblich über die Erfahrung des jeweiligen Bedieners bzw. auf einer Grundlage von Versuchen und den Herstellerangaben den jeweiligen Rohstoffen.

Insgesamt kann die Herstellung einer Folie mit gewünschten Eigenschaften langwieriger Vorarbeiten, die zudem teuer sein können, bedürfen.

Es ist Aufgabe der vorliegenden Erfindung, die voranstehend beschriebenen Nachteile zumindest teilweise zu beheben. Insbesondere ist es Aufgabe der vorliegenden Erfindung, kostengünstiger und auf einfache Weise eine Folie mit den gewünschten Eigenschaften herzustellen.

Die voranstehende Aufgabe wird gelöst durch ein Verfahren mit den Merkmalen des Anspruchs 1 sowie ein Computerprogrammprodukt mit den Merkmalen des Anspruchs 10. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen Computerprogrammprodukt und jeweils umgekehrt, sodass bezüglich der Offenbarung zu den einzelnen Erfindungsaspekten stets wechselseitig Bezug genommen wird bzw. werden kann.

Das erfindungsgemäße Verfahren bezieht sich dabei auf die Herstellung von Folie aus einer Gesamtmenge an Rohstoffen mit einer Folienextrusionsmaschine. Das Verfahren umfasst dabei die folgenden Schritte:
- Erfassen von Maschinenparametern zu Eigenschaften und/oder Einstellungen zumindest einer Folienextrusionsmaschine,
- Erfassen von Folienparametern zu gewünschten Eigenschaften der Folie,
- Erfassen von Rohstoffparametern zu Eigenschaften der Rohstoffe,
- Eingabe der erfassten Parameter in ein Folienproduktionsmodell.

Erfindungsgemäß umfasst das Verfahren auch die Schritte:
- Berechnung einer Auswahl und/oder einer Menge an Rohstoffen aus der Gesamtmenge an Rohstoffen auf Basis der erfassten Parameter und des Folienproduktionsmodells,
- Angabe der Auswahl und/oder der Menge an Rohstoffen.

Das erfindungsgemäße Verfahren dient also dazu, für eine gewünschte Folie anzugeben, welche Teilmenge an Rohstoffen und/oder welche Masse der Rohstoffe aus der zur Verfügung stehenden Gesamtmenge an Rohstoffen auszuwählen ist. Das erfindungsgemäße Verfahren gibt diese Auswahl und/oder die Menge an. Mit "Gesamtmenge" sind im Rahmen der Erfindung die unterschiedlichen Rohstofftypen gemeint, wogegen der Begriff "Masse" bzw. "Menge" das Volumen und/oder das Gewicht des jeweils ausgewählten Rohstoffs widerspiegelt.

Als Folienextrusionsmaschinen können alle Extrusionsmaschinen, aber auch nachgelagerte Komponenten bezeichnet sein, mit welchen sich die Rohstoffe in eine Folie umwandeln lassen, aber auch nachgelagerte Maschinenbestandteile, wie etwa Streckeinrichtungen bis hin zu Wickeleinrichtungen, in der die Folie erstmalig zum Zwecke des Transports aufgewickelt wird. Eine Extrusionsmaschine kann nach dem Prinzip einer Blasfolienanlage oder einer Flachfolienanlage arbeiten.

Unter "Erfassen" werden verschiedene Arten des Erfassens verstanden. So können beispielsweise unveränderliche Parameter einmalig in einer Datenbank erfasst sein. Dies ist beispielsweise der Fall, wenn es sich um geometrische Eigenschaften der Folienextrusionsmaschine handelt. Andere Parameter können in zeitlichen Abständen veränderbar sein, wie etwa Angaben der zur Verfügung stehenden Rohstoffe. Wieder andere Parameter können auftragsbezogen erfasst werden, wie etwa die gewünschten Eigenschaften der Folie. Dementsprechend kann die Erfassung auch auf Basis unterschiedlicher Merkmale erfolgen. So können die Parameter über Datenbanken, die beispielsweise im Speicher der Folienextrusionsmaschinen oder dezentral in Internetportalen gespeichert sind, zur Verfügung gestellt werden. Das Erfassen würde man in diesem Fall als "Auslesen von Daten" bezeichnen. Beispielsweise auftragsbezogene Parameter können über Eingabegeräte, wie etwa einer Tastatur, erfasst werden.

Im Rahmen des erfindungsgemäßen Verfahrens ist es erforderlich, zu zumindest einer Folienextrusionsmaschine Maschinenparameter und/oder Einstellungen zu erfassen. Das Erfassen von Maschinenparametern kann insbesondere bei der Inbetriebnahme erfolgen, bei der in einer Datenbank beispielsweise geometrische Daten der Folienextrusionsmaschine gespeichert werden. Zu diesen geometrischen Daten zählen insbesondere die maximale Anzahl der Schichten der Folie, die maximale Anzahl der einzelnen Rohstoffe, die für eine einzelne Schicht verwendet werden können, die Auslegung von Extruderschnecken zum Aufschmelzen der Rohstoffe, die Breite bzw. der Umfang der Düsenlippe, die Dicke der Düsenlippe. Diese Aufzählung ist nicht abschließend und daher auch nicht in Bezug auf die Erfindung beschränkend.

Das Erfassen der Einstellung bezieht sich auf Maschinenkomponenten, die in Bezug auf geometrische Eigenschaften wie etwa die Position oder in Bezug auf physikalische Größen, wie beispielsweise eine Temperatur, einen Volumenstrom oder eine Geschwindigkeit steuerbar sind. Da diese Einstellungen variabel und im Laufe der Folienproduktion auch regelbar sind, kann sich die Erfassung der Einstellungen auf einen Wertebereich beziehen und nicht nur auf einen einzelnen Einstellwert.

Das Erfassen von Rohstoffparametern bezieht sich auf die Eigenschaften von Rohstoffen, wie etwa Stoffzusammensetzung und Angaben zu deren Herstellparametern, aber auch die Korngröße der Granulatkörner dieser Rohstoffe. Zu Rohstoffparametern können aber auch wirtschaftliche Daten gehören, wie etwa der Preis oder die Verfügbarkeit zu einem bestimmten Zeitpunkt.

Die Gesamtheit der erfassten Parameter ist erfindungsgemäß in einem Folgeschritt einem Folienproduktionsmodell zur Verfügung gestellt. Einer der Kerngedanken ist, dass das Folienproduktionsmodell nun anhand der erfassten Parameter eine Auswahl und/oder eine Menge an Rohstoffen aus der Gesamtheit der zur Verfügung stehenden Rohstoffen auswählt. Es ist also, wie im Stand der Technik, nicht mehr erforderlich, für die gewünschten Eigenschaften der Folie die passenden Rohstoffe manuell zu ermitteln und in der notwendigen Menge zu beschaffen und anschließend die Folienextrusionsmaschine so einzustellen, dass aus den beschafften Rohstoffen die gewünschte Folie hergestellt wird. Vielmehr verwendet das erfindungsgemäße Verfahren die erfassten Parameter innerhalb des Folienproduktionsmodells in Relation zueinander und bestimmt die in Frage kommenden Rohstoffe, die zu der gewünschten Folie führen. Zusätzlich oder alternativ wird auch die benötigte Menge der Rohstoffe berechnet. Letzteres ist insbesondere dann der Fall, wenn die Auswahl bzw. Teilmenge an Rohstoffen, also deren Anzahl, sich mit der Gesamtmenge an Rohstoffen deckt. Der Begriff der Gesamtmenge bedeutet im Rahmen der Erfindung die Gesamtanzahl unterschiedlicher Rohstoffe und nicht deren physikalische Parameter wie Gewicht, Volumen oder Dichte.

Als nachfolgender Schritt des erfindungsgemäßen Verfahrens werden nun Informationen zur Auswahl und/oder zur Menge an Rohstoffen ausgegeben. Diese Ausgabe kann beispielsweise auf einem Bildschirm erfolgen, so dass ein Mitarbeiter eines Folienproduzenten diese Informationen weiterverarbeiten kann. Diese Informationen können aber auch direkt oder indirekt an eine Schnittstelle ausgegeben werden, so dass eine elektronische Weiterverarbeitung ermöglicht wird. So ist es denkbar, dass die Informationen in ein digitales Bestellsystem für die Rohstoffe ausgegeben werden, so dass eine Bestellung der benötigten Rohstoffe für die Folienherstellung besonders schnell erfolgt. Die Informationen können aber auch direkt an eine zuvor festgelegte Folienextrusionsmaschine ausgegeben werden, so dass diese sich beispielsweise über ein automatisches System die Rohstoffe aus Rohstoffbereitstellungseinrichtungen, insbesondere Silos, selbstständig beschafft. Denkbar ist auch die Ausgabe der Informationen an ein Lager, in der ein Mitarbeiter dann die benötigten Rohstoffe in den benötigten Mengen kommissionieren kann.

Es kann weitere Vorteile mit sich bringen, wenn eine Empfehlung abgegeben wird, welche Folienextrusionsmaschine zur Herstellung der gewünschten Folie ausgewählt werden sollte, wenn mehrere Folienextrusionsmaschinen, insbesondere unterschiedliche Folienextrusionsmaschinen zur Herstellung der Folie grundsätzlich zur Verfügung stehen. Oft stehen in einem Herstellungsbetrieb mehrere Folienextrusionsanlagen zur Verfügung, die sich in ihren Auslegungen hinsichtlich der geometrischen Daten, aber auch hinsichtlich ihrer physikalischen Parameter voneinander unterscheiden. In einer solchen Situation ist es möglich, eine dieser Anlagen auf Basis des Folienproduktionsmodells auszuwählen. Beispielsweise kann es bei einer gewünschten Folie, die einen fünfschichtigen Aufbau hat, vorteilhaft sein, wenn das Produkt auf einer Folienextrusionsanlage für Folien mit einem maximal siebenschichtigen Aufbau hergestellt wird.

Das erfindungsgemäße Verfahren kann auch einen Schritt umfassen, bei dem in Abhängigkeit von den Rohstoffen eine Voraussage des maximal möglichen Ausstoßes der Folienextrusionsmaschine, insbesondere der ausgewählten Folienextrusionsmaschine, getroffen wird. Der maximal mögliche Ausstoß ist nicht nur von Maschinenparametern abhängig, sondern vor allem von den verwendeten Rohstoffen. Auf Basis dieser Informationen können sogar die tatsächlich verwendeten Maschineneinstellungen angepasst werden. Der Vorteil dieser Vorgehensweise ist, dass sich die notwendige Maschinenzeit für die Herstellung der Folie reduziert, so dass der Kostenanteil der Maschinenzeit am Endprodukt sinkt.

Weiterhin kann es vorteilhaft sein, wenn das erfindungsgemäße Verfahren einen Schritt umfasst, in welchem eine Berechnung der voraussichtlichen Eigenschaften der Folie auf Basis des Folienproduktionsmodells erfolgt. Es kann möglich sein, dass die Folie nicht vollständig die gewünschten Eigenschaften aufweist, sondern es geringe Abweichungen gibt, beispielsweise wenn ein erforderlicher Rohstoff nicht gemäß den Spezifikationen verarbeitet werden kann. Die Eigenschaften der Folie können jedoch in diesem Fall angepasst und anschließend die tatsächlichen Eigenschaften mitgeteilt werden, um sie bei der späteren Folienverarbeitung berücksichtigen zu können. Zudem können die gewünschten Eigenschaften und die voraussichtlichen Eigenschaften durch nachträgliche Tests überprüft werden. Das ermöglicht eine Anpassung des Folienproduktionsmodells.

Es kann sogar möglich sein, dass die gewünschten Eigenschaften der Folie nicht erreichbar sind, sondern hinsichtlich einzelner Eigenschaften abweichen. Dies kann beispielsweise der Fall sein, wenn ein Rohstoff benötigt wird, dieser sich aber nicht innerhalb der Gesamtmenge der Rohstoffe befindet. In diesem Fall kann das Folienproduktionsmodell einen alternativen Rohstoff vorschlagen bzw. auswählen. In einem anderen Fall können Rohstoffe angegeben werden, von denen einer nicht wie erforderlich in der Folienextrusionsmaschine verarbeitet werden kann. Die Abweichung von gewünschten Eigenschaften der Folie zu voraussichtlichen Eigenschaften der Folie kann in einem solchen Fall evaluiert und eine Entscheidung seitens des Folienproduzenten getroffen werden.

Dabei kann es hilfreich sein, wenn in dem erfindungsgemäßen Verfahren ein Schritt erfolgt, in dem Toleranzgrenzen hinsichtlich mindestens einer Eigenschaft der Folie erfasst werden. Es wird damit ermöglicht, dass mehrere Angaben zur Auswahl und/oder Menge an Rohstoffen erfolgt. Vorteilhaft ist es dabei, wenn zusätzlich ein Vergleich jeweils einer Eigenschaft der gewünschten Folie mit der gleichen Eigenschaft der voraussichtlichen Folie erfolgt. Es kann einer Priorisierung der Eigenschaften erfolgen. So kann es möglich sein, dass eine bestimmte, nicht relevante Eigenschaft in größerem Rahmen tolerabel ist, im Gegenzug aber die Toleranzgrenzen für eine relevante Eigenschaft, wie etwa die Dehnfähigkeit der Folie, enger gesetzt werden können.

Weitere Vorteile treten zutage, wenn das erfindungsgemäße Verfahren um den folgenden Schritt ergänzt wird: Berücksichtigung von früheren Aufträgen bei der Berechnung der Auswahl und/oder der Mengen von Rohstoffen. Eine Berücksichtigung früherer Aufträge kann beispielsweise verwendet werden, um Relationen zwischen Parametern vor der Berechnung zu modifizieren, um so eine höhere Genauigkeit der Ergebnisse der Berechnung zu erzielen. Insgesamt führt diese Maßnahme zur Verbesserung des Folienproduktionsmodells. Dies kann letztendlich zu einer Folie führen, die die gewünschten Eigenschaften noch besser erfüllt.

Vorteilhaft ist es auch, wenn das erfindungsgemäße Verfahren um die Schritte: Erfassen von chargenspezifischen Eigenschaften zumindest eines Teils der Rohstoffe und Berücksichtigung dieser chargenspezifischen Eigenschaften ergänzt wird. In der Regel unterscheiden sich nominell gleiche Rohstoffe in ihren Eigenschaften, wenn sie zu unterschiedlichen Zeiten und insbesondere nicht durchgehend hergestellt werden. Eine erneute Produktion des gleichen Rohstoffs erfolgt dabei oft unter leicht veränderten Bedingungen. Beispielsweise können solche Informationen zu den Produktionsbedingungen der entsprechenden Charge im Rahmen des erfindungsgemäßen Verfahrens erfasst werden. Eine Berücksichtigung dieser Informationen und damit der chargenspezifischen Eigenschaften erfüllt die Aufgabe der vorliegenden Erfindung noch besser.

Um das erfindungsgemäße Verfahren in vorteilhafter Weise weiter zu verbessern, können die folgenden Schritte hinzugefügt werden:
- Erfassen zumindest einer Eigenschaft der Folie
- Berechnen der Abweichung dieser Eigenschaft von der Eigenschaft der voraussichtlichen Eigenschaft der Folie
- Ableiten zumindest einer Eigenschaft eines Rohstoffes

Hierbei können die Eigenschaften der Folie in einer nachgelagerten Untersuchung inline oder offline durch direkte oder indirekte Ermittlungen festgestellt werden. Diese können innerhalb der Folienextrusionsmaschine erfolgen, aber auch in Maschinen, welche die Folie verarbeiten. Denkbar sind aber auch genaue Untersuchungen, etwa in einem Labor. Zu diesen Eigenschaften werden also insbesondere quantitative Daten ermittelt, die nun mit Daten zu den voraussichtlichen Eigenschaften verglichen werden. Aus der Berechnung lässt sich zumindest eine Eigenschaft eines Rohstoffs ableiten. Auf Basis dieser Ableitung können beispielsweise Rohstoffparameter verifiziert werden. Die Verifizierung der Rohstoffparameter kann beispielsweise verwendet werden, um einen Fehler zu ermitteln und beispielsweise eine Fehlermeldung auszugeben. Ein Fehler kann etwa verursacht werden, wenn ein falscher Rohstoff zur Herstellung der Folie bereitgestellt wurde.

Ebenfalls Gegenstand der vorliegenden Erfindung ist ein Computerprogrammprodukt, umfassend Befehle, die bei einer Ausführung des Programms auf einem Computer diesen dazu veranlassen, die Schritte eines erfindungsgemäßen Verfahrens durchzuführen. Damit bringt ein erfindungsgemäßes Computerprogrammprodukt die gleichen Vorteile mit sich, wie sie ausführlich mit Bezug auf ein erfindungsgemäßes Verfahren erläutert worden sind.
- Fig. 1: Schematische Darstellung einer Folienextrusionsmaschine,
- Fig. 2: Schematische Darstellung einer anderen Folienextrusionsmaschine
- Fig. 3: Schematische Darstellung des Ablaufs des erfindungsgemäßen Verfahrens
- Fig. 4: Schematische Darstellung des Ablaufs des erfindungsgemäßen Verfahrens mit einer Ergänzung.

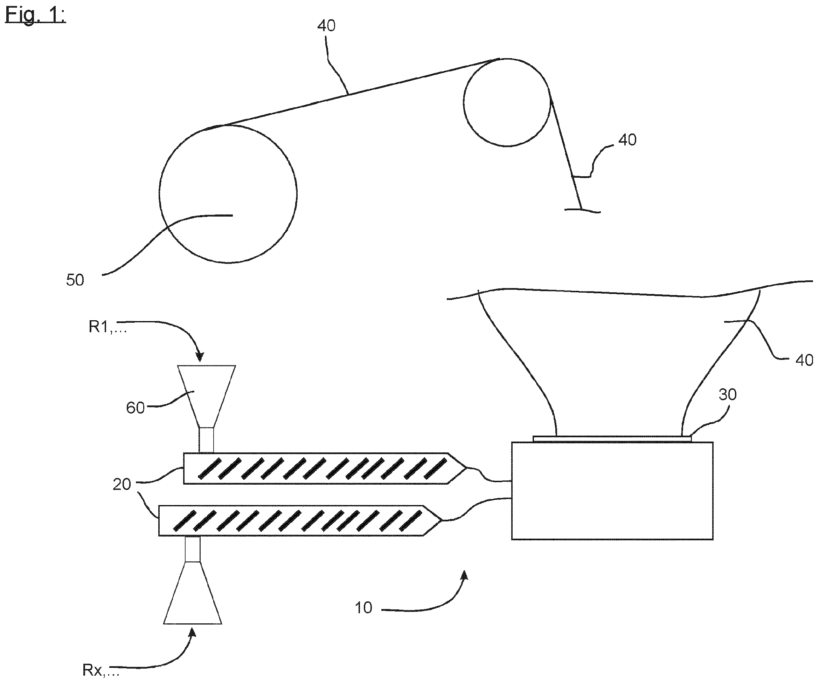

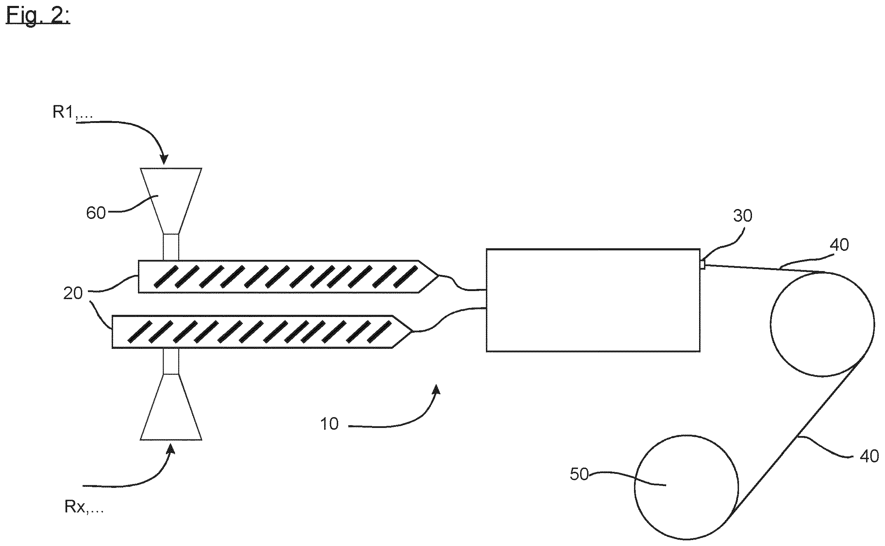

In den **Figuren 1** **und** **2** sind beispielhaft Folienextrusionsmaschinen 10 dargestellt. Gemeinsam ist diesen Folienxtrusionsmaschinen, dass sie mit Extrudern 20 ausgestattet sind. Jeder einzelne Extruder versorgt die Folienextrusionsmaschinen mit aufgeschmolzenem Kunststoffmaterial für eine Schicht der späteren Folie, welche eine Kunststofffolie ist. Einem ersten Extruder werden dazu über Dosiereinrichtungen 60 ein oder mehrere Rohstoffe R1,... . zugeführt, einem zweiten Extruder werden auf diese Weise ein oder mehrere Rohstoffe Rx,... zugeführt. Die Rohstoffe liegen in der Regel in Form von Kunststoffgranulat vor. Die Art und/oder die Menge der zugeführten Rohstoffe werden durch das erfindungsgemäße Verfahren vorbestimmt.

Das erfindungsgemäße Verfahren kann unter Verwendung einer Flachfolien- oder einer Blasfolienextrusionsanlage gemäß der Figur 2 durchgeführt werden. Die **Figur 1** zeigt eine Blasfolienanlage mit den bereits beschriebenen Extrudern 20. Aus der Düse 30 wird eine Folienbahn oder kurz Folie 40 ausgegeben, wobei die Düse 30 als ringförmige Blasdüse ausgebildet ist. Die Folienbahn ist zunächst als Blase ausgebildet, die aber später flachgelegt wird. Diese Folie, die nun zwei aufeinander liegende Einzelfolien umfasst, wird über verschiedene Zwischenelemente auf eine Wickelrolle 50 oder nach erfolgtem Auseinanderschneiden auf zwei Wickelrollen nach links aufgewickelt.

In der **Figur 2** handelt es sich bei der Folienextrusionsmaschine um eine Flachfolienextrusionsmaschine, welche hier ebenfalls exemplarisch mit zwei Extrudern 20 für unterschiedliche Rezepturen ausgestattet ist. Aus der Düse 30 wird eine Folienbahn 40 ausgegeben, welche auf einer Kühlwalze abkühlt und anschließend auf einer Wickelrolle 50 aufgewickelt wird.

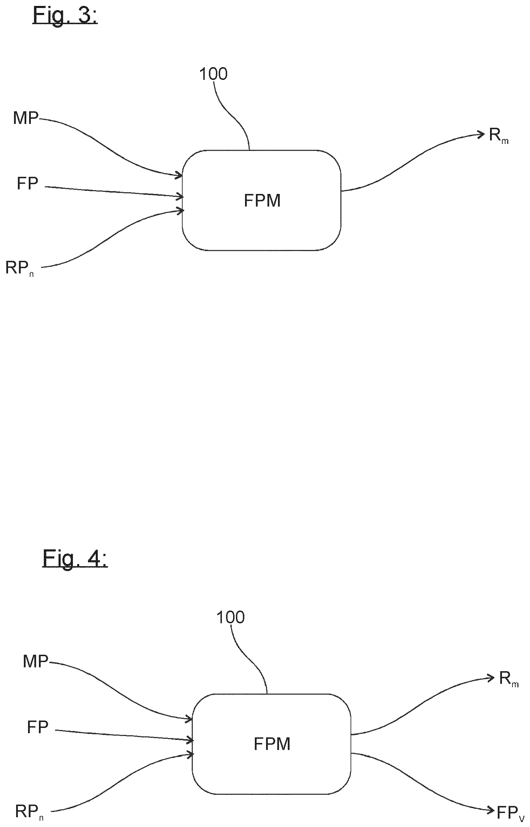

Die **Figur 3** zeigt schematisch den Ablauf des erfindungsgemäßen Verfahrens. Einer Speicher- und Recheneinrichtung 100 werden Maschinenparameter MP zu Eigenschaften und/oder Einstellungen zumindest einer Folienextrusionsmaschine, Folienparameter FP zu gewünschten Eigenschaften der Folie und Rohstoffparametern RPₙ zu Eigenschaften der Rohstoffe bereitgestellt. Der Index n der Rohstoffparameter RP zeigt an, dass es sich hier um eine Gesamtheit an Rohstoffen handelt, aus der ein oder mehrere Rohstoffe auswählbar sind. Innerhalb der Speicher- und Recheneinheit wird das Folienproduktionsmodell ausgeführt, welches als Eingaben die vorgenannten Parameter erfasst und daraus erfindungsgemäß berechnet, welche Rohstoffe Rₘ aus der Gesamtheit der Rohstoffe RPₙ ausgewählt werden. Erfindungsgemäß wird alternativ oder gleichzeitig auch die benötigte Menge der Rohstoffe Rₘ berechnet. Dabei gilt, dass die Anzahl der ausgewählten Rohstoffe kleiner oder gleich der Anzahl der Rohstoffe in der Gesamtheit ist, also m ≤ n.

Die **Figur 4** zeigt einen abgeänderten Verlauf des erfindungsgemäßen Verfahrens. Es ist mit der schematischen Darstellung gemäß Figur 3 vergleichbar, jedoch erfolgen als Ausgabe auch die voraussichtlichen Eigenschaften der Folie FPᵥ.

| **Bezugszeichenliste** | |
|---|---|
| 10 | Folienextrusionsmaschine |
| 20 | Extruder |
| 30 | Düse |
| 40 | Folienbahn |
| 50 | Wickelrolle |
| 60 | Dosiereinrichtung |
| 100 | Speicher- und Recheneinrichtung |
| | |
| R_{1,...} | Rohstoff |
| R_{x,...} | Rohstoff |
| MP | Maschinenparameter |
| FP | Folienparameter |
| RPₙ | Rohstoffparameter für die Gesamtmenge der Rohstoffe |
| Rₘ | ausgewählte Rohstoffe |
| FPM | Folienproduktionsmodell |

## Patentansprüche

1. Verfahren zur Herstellung von Folie (40) aus einer Gesamtmenge an Rohstoffen mit einer Folienextrusionsmaschine (10), umfassend die folgenden Schritte:
• Erfassen von Maschinenparametern (MP) zu Eigenschaften und/oder Einstellungen zumindest einer Folienextrusionsmaschine (10)
• Erfassen von Folienparametern (FP) zu gewünschten Eigenschaften der Folie (40)
• Erfassen von Rohstoffparametern (RPₙ) zu Eigenschaften der Rohstoffe
• Eingabe der erfassten Parameter (RPₙ) in ein Folienproduktionsmodell (FPM)
**gekennzeichnet durch die Schritte:**
• Berechnung einer Auswahl und/oder einer Menge an Rohstoffen (RPₘ) aus der Gesamtmenge an Rohstoffen auf Basis der erfassten Parameter und des Folienproduktionsmodells (FPM)
• Ausgabe von Informationen zur Auswahl und/oder zur Menge an Rohstoffen (RPₘ).

2. Verfahren nach Anspruch 1, zusätzlich mit dem folgenden Schritt:
Angabe einer Empfehlung einer Folienextrusionsmaschine (10), auf welcher die Folie (40) hergestellt wird.

3. Verfahren nach Anspruch 1, zusätzlich mit dem folgenden Schritt:
Berechnung der voraussichtlichen Eigenschaften (FPᵥ) der Folie (40) auf Basis des Folienproduktionsmodells (FPM).

4. Verfahren nach einem der vorstehenden Ansprüche, zusätzlich mit dem folgenden Schritt:
Berücksichtigung von früheren Aufträgen bei der Berechnung der Auswahl und/oder Mengen von Rohstoffen (RPₘ).

5. Verfahren nach einem der vorstehenden Ansprüche, zusätzlich mit den folgenden Schritten:
- Erfassen von chargenspezifischen Eigenschaften zumindest eines Teils der Rohstoffe (RPₙ)
- Berücksichtigung dieser chargenspezifischen Eigenschaften
- Berechnung einer Auswahl und/oder einer Menge an Rohstoffen (RPₘ).

6. Verfahren nach einem der vorstehenden Ansprüche, zusätzlich mit den folgenden Schritten:
- Erfassen zumindest einer Eigenschaft der Folie (FP)
- Berechnen der Abweichung dieser Eigenschaft von der voraussichtlichen Eigenschaft der Folie (FPᵥ)
- Ableiten zumindest einer Eigenschaft eines Rohstoffes

7. Computerprogrammprodukt, umfassend Befehle, die bei einer Ausführung des Programms auf einem Computer diesen dazu veranlassen, die Schritte eines Verfahrens mit den Merkmalen eines der Ansprüche 1 bis 6 durchzuführen.

## Claims

1. Method for producing a film (40) from a total quantity of raw materials using a film extrusion machine (10), comprising the following steps:
- detecting machine parameters (MP) relating to properties and/or settings of at least one film extrusion machine (10)
- detecting film parameters (FP) relating to desired properties of the film (40)
- detecting raw material parameters (RPⁿ) relating to properties of the raw materials
- inputting the detected parameters (RPⁿ) in a film production model (FPM),
**characterised by** the following steps:
- calculating a selection and/or a quantity of raw materials (RP^{m}) from the total quantity of raw materials based on the detected parameters and the film production model (FPM)
- outputting information relating to the selection and/or the quantity of raw materials (RP^{m}).

2. Method according to claim 1, additionally comprising the following step:
specifying a recommendation of a film extrusion machine (10) on which the film (40) is produced.

3. Method according to claim 1, additionally comprising the following step:
calculating the expected properties (FPᵥ) of the film (40) based on the film production model (FPM).

4. Method according to any one of the preceding claims, additionally comprising the following step:
considering previous orders when calculating the selection and/or quantities of raw materials (RP^{m}).

5. Method according to any one of the preceding claims, additionally comprising the following steps:
- detecting batch-specific properties of at least a part of the raw materials (RPⁿ)
- considering said batch-specific properties,
- calculating a selection and/or quantity of raw materials (RP^{m}).

6. Method according to any one of the preceding claims, additionally comprising the following steps:
- detecting at least one property of the film (FP)
- calculating the deviation of said property from the expected property of the film (FPᵥ)
- inferring at least one property of a raw material.

7. Computer program product comprising instructions which, when the program is executed
on a computer, cause the computer to carry out the steps of a method comprising the features of any one of claims 1 to 6.

## Revendications

1. Procédé de fabrication d'un film (40) à partir d'une quantité totale de matières premières avec une machine d'extrusion de film (10), comprenant les étapes suivantes de :
- détection de paramètres de machine (MP) pour des propriétés et/ou réglages d'au moins une machine d'extrusion de film (10)
- détection de paramètres de film (FP) pour des propriétés souhaitées du film (40)
- détection de paramètres de matières premières (RPⁿ) pour des propriétés des matières premières
- saisie des paramètres détectés (RPⁿ) dans un modèle de production de film (FPM)
**caractérisé par** les étapes suivantes :
- calcul d'une sélection et/ou d'une quantité de matières premières (RP^{m}) à partir de la quantité totale de matières premières sur la base des paramètres détectés et du modèle de production de film (FPM)
- sortie d'informations sur la sélection et/ou la quantité de matières premières (RP^{m}).

2. Procédé selon la revendication 1, avec en outre l'étape suivante :
indication d'une recommandation d'une machine d'extrusion de film (10) sur laquelle le film (40) est fabriqué.

3. Procédé selon la revendication 1, avec en outre l'étape suivante :
calcul des propriétés attendues (FPᵥ) du film (40) sur la base du modèle de production de film (FPM).

4. Procédé selon l'une quelconque des revendications précédentes, avec en outre l'étape suivante :
prise en compte de commandes antérieures dans le calcul de la sélection et/ou de quantités de matières premières (RP^{m}).

5. Procédé selon l'une quelconque des revendications précédentes, avec en outre les étapes suivantes :
- détection de propriétés spécifiques aux lots d'au moins une partie des matières premières (RPⁿ)
- prise en compte de ces propriétés spécifiques aux lots
- calcul d'une sélection et/ou d'une quantité de matières premières (RP^{m}).

6. Procédé selon l'une quelconque des revendications précédentes, avec en outre les étapes suivantes :
- détection d'au moins une propriété du film (FP)
- calcul de l'écart entre cette propriété et la propriété attendue du film (FPᵥ)
- déduction d'au moins une propriété d'une matière première

7. Produit de programme informatique comprenant des instructions qui, lorsque le programme
est exécuté sur un ordinateur, amènent celui-ci à mettre en œuvre les étapes d'un procédé avec les caractéristiques d'une des revendications 1 à 6.
